# EUROPÄISCHE PATENTSCHRIFT

(11) **EP 2 540 613 B1**
(45) Veröffentlichungstag und Bekanntmachung des Hinweises auf die Patenterteilung: **21.08.2013**
(21) Anmeldenummer: 11005270.1
(22) Anmeldetag: 28.06.2011
(51) Int. Cl.: B63C 11/52, E21B 33/038, F16L 1/26, F16L 37/00, F16L 39/00, H01R 13/523

(54) **Anschlussvorrichtung für eine Versorgungsleitung**
Connector device for a feed line
Dispositif de raccordement pour un conduit d'alimentation

(43) Veröffentlichungstag der Anmeldung: 02.01.2013
(73) Patentinhaber: BAUER Maschinen GmbH, 86529 Schrobenhausen (DE)
(72) Erfinder: Reich, Reinhard, 86568 Hollenbach (DE)
(74) Vertreter: Wunderlich, Rainer

(56) Entgegenhaltungen:
- US-A- 3 635 184
- US-A- 4 075 862
- US-A- 5 295 848
- US-A1- 2006 079 107

## Beschreibung

Die Erfindung betrifft eine Anschlussvorrichtung für eine Versorgungsleitung mit einem Hüllschlauch und mindestens zwei darin angeordneten Innenleitungen, wobei ein Gehäuse mit einem ersten Anschlussbereich für den Hüllschlauch und ein zweiter Anschlussbereich für die Innenleitungen vorgesehen ist.

Derartige Versorgungsleitungen dienen etwa zur Verbindung von Unterwassereinheiten mit Versorgungsschiffen. Über die Versorgungsleitung wird von dem Versorgungsschiff insbesondere Energie, Daten sowie verschiedene Fluide an die Unterwassereinheit geleitet, so dass diese in der gewünschten Weise etwa am Grund des Meeres oder eines Sees arbeiten kann. Eine derartige Versorgungsleitung weist innerhalb eines Hüllschlauches entsprechend der vorzusehenden Versorgung verschiedene Leitungen auf.

Gerade auf hoher See ist es jedoch immer wieder erforderlich, die Versorgungsleitung kurzfristig zu kappen, etwa wenn dies hoher Wellengang oder ein Sturm erforderlich machen. Erfolgt dies nicht oder nicht rechtzeitig, besteht die Gefahr, dass über die Versorgungsleitung unerwünschte Kräfte auf die Unterwassereinheit übertragen werden, durch welche deren Sicherheit und Funktionsfähigkeit beeinträchtigt werden kann. Auch besteht die Gefahr eines unkontrollierten Abreißens der Versorgungsleitung, so dass dann ein Wiederherstellen der Verbindung nicht oder nur mit erheblichem Aufwand möglich wäre.

Eine gattungsgemäße Anschlussvorrichtung ist beispielsweise aus der US 5,295,848 bekannt. Am Ende eines Versorgungsschlauches ist eine hülsenförmige Steckeinrichtung vorgesehen, durch welche eine Außenhülse axial in eine entsprechende Aufnahmebuchse einsteckbar ist. Innerhalb der Hülse sind axiale Anschlüssen in Achsrichtung verfahrbar gelagert, um zum Anschließen zunächst ein Verbinden der inneren Leitungen zu erlauben, bevor der äußere Hüllschlauch befestigt werden kann.

Bei dieser bekannten Anschlussvorrichtung erfolgt also ein Anschließen der inneren Leitungen zu einem Zeitpunkt, zu welchem der äußere Hüllschlauch noch nicht mechanisch befestigt ist. Bei einem stärkeren Seegang etwa kann durch unkontrollierte Bewegungen des Versorgungsschiffes ein Abreißen der angeschlossenen inneren Leitungen erfolgen, wenn der Hüllschlauch noch nicht befestigt ist. Zudem ist ein Lösen der Versorgungsleitung in bestimmten Notfallsituationen nicht sehr schnell möglich, da zunächst die Verbindung des umgebenden Hüllschlauches gelöst werden muss und erst dann ein Lösen der axialen Steckverbindungen der Innenleitungen möglich ist.

Der Erfindung liegt die **Aufgabe** zugrunde, eine Anschlussvorrichtung für eine Versorgungsleitung vorzusehen, welche einerseits ein zuverlässiges und sicheres Anschließen sowie gleichwohl ein schnelles Lösen erlaubt.

Die Aufgabe wird nach der Erfindung durch eine Anschlussvorrichtung mit den Merkmalen des Anspruchs 1 gelöst. Bevorzugte Ausführungsformen sind in den abhängigen Ansprüchen angegeben.

Die erfindungsgemäße Anschlussvorrichtung ist dadurch gekennzeichnet, dass der erste Anschlussbereich mindestens ein Halteelement aufweist, welches zum Halten oder Lösen des Hüllschlauches radial an diesen zustellbar beziehungsweise von diesem rückstellbar gelagert ist und dass der zweite Anschlussbereich axial beabstandet zu dem ersten Anschlussbereich angeordnet ist und axial betätigbare Steckverbindungselemente für die Innenleitungen aufweist.

Ein erster Aspekt der Erfindung besteht darin, zum Anschließen des Hüllschlauches ein radial verstellbares Halteelement vorzusehen. Der Hüllschlauch nimmt die wesentlichen mechanischen Kräfte der Versorgungsleitung auf. Während bei einer axialen Verbindung bei möglichen hohen mechanischen Querkräften ein Verklemmen auftreten könnte, kann ein radial verstellbares Halteelement auch bei am Hüllschlauch anliegenden hohen mechanischen Spannungen einfach zu- oder rückgestellt werden. Dies erlaubt insbesondere in Notfallsituationen ein schnelles und zuverlässiges mechanisches Lösen des Hüllschlauches der Versorgungsleitung.

Ein weiterer Aspekt der Erfindung besteht darin, dass der erste Anschlussbereich zum Anschließen des Hüllschlauches axial beabstandet von dem zweiten Anschlussbereich für die axialen Steckverbindungselemente der Innenleitungen angeordnet ist. Auf diese Weise wird ermöglicht, dass zunächst der äußere Hüllschlauch angeschlossen ist. Wenn diese mechanisch stabile Verbindung hergestellt ist, können in dem beabstandeten zweiten Anschlussbereich die aus dem Hüllschlauch vorstehenden Innenleitungen sicher angeschlossen oder gelöst werden. Auf diese Weise wird verhindert, dass durch heftige Bewegungen eines Versorgungsschiffes innere Hydraulikleitungen abreißen und so unkontrolliert Hydraulikflüssigkeit austritt. Zudem besteht durch die erfindungsgemäße Anordnung ausreichend Raum zur Anordnung der Steckverbindungselemente, so dass diese leicht und zuverlässig von Bedienern betätigt werden können.

Durch die erfindungsgemäße Anschlussvorrichtung ist so insbesondere bei rauen Hochseebedingungen ein sicheres Anschließen und Lösen einer maritimen Versorgungsleitung möglich.

Eine bevorzugte Ausführungsform der Erfindung besteht darin, dass zwei plattenförmige Halteelemente vorgesehen sind, welche auf gegenüberliegenden Seiten des Hüllschlauches verschiebbar gelagert sind. Mit derartigen plattenförmigen Halteelementen kann der Hüllschlauch zuverlässig am ersten Anschlussbereich eingespannt werden. Durch einfaches Rückfahren der Halteelemente ist auch bei hohen anliegenden Spannungen ein schnelles und sicheres Lösen der Verbindung möglich.

Grundsätzlich kann das Verschieben der plattenförmigen Halteelemente von Hand erfolgen. Besonders vorteilhaft ist es nach der Erfindung, dass das mindestens eine Halteelement mittels eines Stellzylinders betätigbar ist. Der Stellzylinder ist dabei vorzugsweise ein Hydraulikzylinder, welcher über eine entsprechende Steuereinrichtung angesteuert wird.

Für eine zuverlässige Verbindung ist es nach der Erfindung weiterhin bevorzugt, dass die Steckverbindungselemente an einer Verbindungsplatte in mindestens einer Reihe nebeneinander angeordnet sind. Die Anordnung kann insbesondere auch in zwei oder mehr Reihen aufweisen. Dies erlaubt eine Platz sparende kompakte Anordnung, wobei jedoch weiterhin eine gute Zugänglichkeit für Bedienpersonal gegeben ist.

Die einzelnen Steckverbindungselemente für die Innenleitungen werden grundsätzlich von Hand in entsprechende Gegenstücke am zweiten Anschlussbereich eingesteckt. Ein Lösen kann in gleicher Weise von Hand erfolgen. Allerdings ist es für ein besonders schnelles Lösen nach der Erfindung vorteilhaft, dass eine Löseeinrichtung zum gemeinsamen Lösen der Innenleitungen von den Steckverbindungselementen vorgesehen ist. Diese Löseeinrichtung kann beispielsweise aktiv die entsprechenden Stecker der Innenleitungen aus den Steckverbindungselementen herausziehen. Für bestimmte hydraulische Schnellkupplungen kann die Lösebewegung auch darin bestehen, dass die Stecker der Innenleitungen in Richtung auf die Steckelemente zubewegt werden, wobei dann die Stecker aus den Steckverbindungselementen ausrasten und gelöst sind. Die Löseeinrichtung kann je nach Art des Steckverbindungselementes die entsprechende Lösebewegung durchführen. Durch ein gleichzeitiges gemeinsames Lösen der Steckverbindungselemente wird insbesondere in Notfallsituationen ein schnelles kontrolliertes Kappen der Versorgungsleitung erreicht.

Besonders bevorzugt ist es dabei nach der Erfindung, dass die Löseeinrichtung mindestens eine Löseplatte mit Betätigungsnocken aufweist, welche Steckelemente der Innenleitungen für ein axiales Betätigen teilweise umfassen. An den Steckelementen können hierfür radiale Vorsprünge oder Krägen vorgesehen sein, welche zum Aufbringen einer axialen Lösebewegung mit der Löseplatte in Kontakt kommen. Die Löseplatte kann etwa kammartig ausgebildet sein, wobei die Kammzacken die Betätigungsnocken bilden.

Ein Lösen ist nach der Erfindung dadurch besonders zuverlässig zu erreichen, dass die Löseeinrichtung mittels eines Stellzylinders betätigbar ist. Dieser Stellzylinder ist bevorzugt ebenfalls ein Hydraulikzylinder.

Für ein kontrolliertes Kappen ist es nach der Erfindung vorteilhaft, dass eine Steuereinrichtung vorgesehen ist, durch welche das mindestens eine Halteelement für den Hüllschlauch und die Löseeinrichtung für die Innenleitungen abgestimmt aufeinander betätigbar sind. Dabei ist es bevorzugt, dass das Lösen der Innenleitungen zeitlich vor oder zumindest gleichzeitig mit dem Lösen des Hüllschlauches erfolgt. Auf diese Weise wird verhindert, dass übermäßige mechanische Belastungen auf die empfindlichen elektrischen, elektronischen oder hydraulischen Steckelemente oder Kupplungen übertragen werden.

Grundsätzlich können für die Innenleitungen verschiedenste Leitungen vorgesehen sein. Bevorzugt ist es nach der Erfindung, dass die Innenleitungen Stromkabel, Datenkabel und/oder Fluidschläuche umfassen. Die Fluidschläuche können Hydraulikoder Pneumatikschläuche sein. Auch Versorgungsschläuche für Wasser, Luft oder andere Flüssigkeiten und Gase sind ebenfalls möglich.

Eine weitere bevorzugte Ausführungsform besteht nach der Erfindung darin, dass das Gehäuse eine Außenplatte aufweist, an welcher der erste Anschlussbereich für den Hüllschlauch vorgesehen ist, dass die Außenplatte eine Durchgangsöffnung aufweist, durch welche die Innenleitungen in das Gehäuse zu dem zweiten Anschlussbereich durchführbar sind, und dass zwischen der Außenplatte und dem zweiten Anschlussbereich ein Führungstrichter angeordnet ist, welcher sich zur Durchgangsöffnung hin verjüngt.

Mit dieser Anordnung können die Innenleitungen sehr kompakt innerhalb des Hüllschlauches angeordnet werden, welcher etwa ein Förderschlauch sein kann, welcher bei Baumaschinen und insbesondere Schlitzwandfräsen bekannt ist. Zum Betätigen der einzelnen Steckverbindungen können sich die Innenleitungen nach dem Heraustritt aus dem Hüllschlauch verzweigen, so dass ausreichend Raum zum Bedienen am zweiten Anschlussbereich besteht. Um bei einem kontrollierten Kappen einen sicheren Durchtritt der Steckverbinder durch die Durchgangsöffnung der Anschlussplatte sicherzustellen, ist ein Führungstrichter vorgesehen. Dieser Führungstrichter ist an der Durchgangsöffnung angeordnet und weitet sich zum zweiten Anschlussbereich hin.

Weiterhin ist es nach der Erfindung bevorzugt, dass zwischen der Anschlussplatte und einer Verbindungsplatte des zweiten Anschlussbereiches Führungsleisten angeordnet sind. Diese Führungsleisten dienen ebenso wie der Führungstrichter einem kontrollierten Ausleiten der Innenleitungen durch die Durchgangsöffnung bei einem kontrollierten Kappen der Versorgungsleitung.

Die Erfindung wird weiter anhand von bevorzugten Ausführungsbeispielen erläutert, welche schematisch in den Zeichnungen dargestellt sind. In den Zeichnungen zeigen:
- Fig. 1: eine perspektivische teilgeschnittene Ansicht einer erfindungsgemäßen Anschlussvorrichtung;
- Fig. 2: eine Detailansicht des ersten Anschlussbereiches in geschlossenem Zustand;
- Fig. 3: eine Detailansicht des ersten Anschlussbereiches in geöffnetem Zustand;
- Fig. 4: eine Detailansicht des zweiten Anschlussbereiches in geschlossenem Zustand;
- Fig. 5: eine Detailansicht des zweiten Anschlussbereiches in geöffnetem Zustand;
- Fig. 6: eine schematische Querschnittsansicht des zweiten Anschlussbereiches in geöffnetem Zustand.

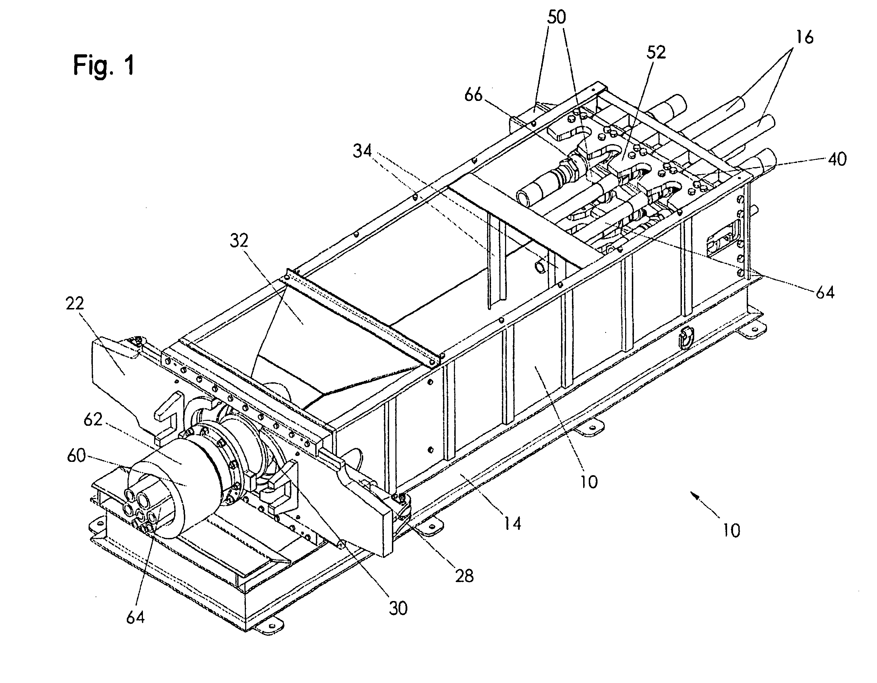

Ein Ausführungsbeispiel einer erfindungsgemäßen Anschlussvorrichtung 10 ist im Überblick in der teilweise geschnittenen perspektivischen Ansicht von Fig. 1 dargestellt. Die Anschlussvorrichtung 10 umfasst ein kastenförmiges Gehäuse 12, welches auf einem Grundrahmen 14 aus Stahlträgern befestigt ist. Der Grundrahmen 14 kann fest mit einem Versorgungsschiff verbunden sein.

Die Anschlussvorrichtung 10 dient dem lösbaren Anschließen einer Versorgungsleitung 60 mit einem äußeren Hüllschlauch 62 und darin angeordneten Innenleitungen 64, welche mit korrespondierenden stationären Leitungen 16 lösbar zu verbinden sind. Auf diese Weise kann über die stationären Leitungen 16 von dem Versorgungsschiff über die Versorgungsleitung 60 eine Verbindung zu beispielsweise einer Unterwassereinheit erfolgen.

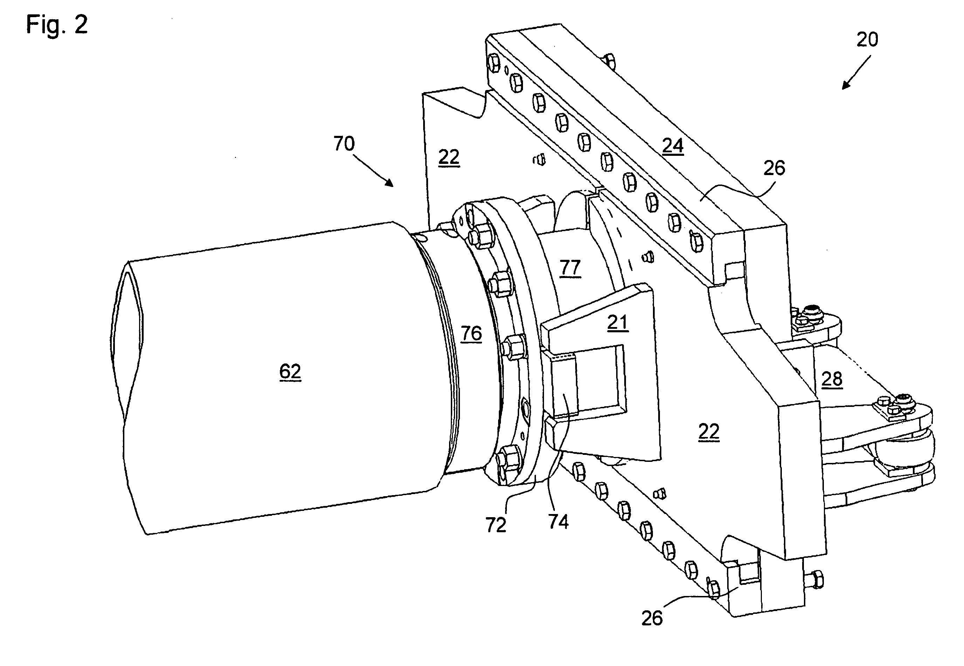

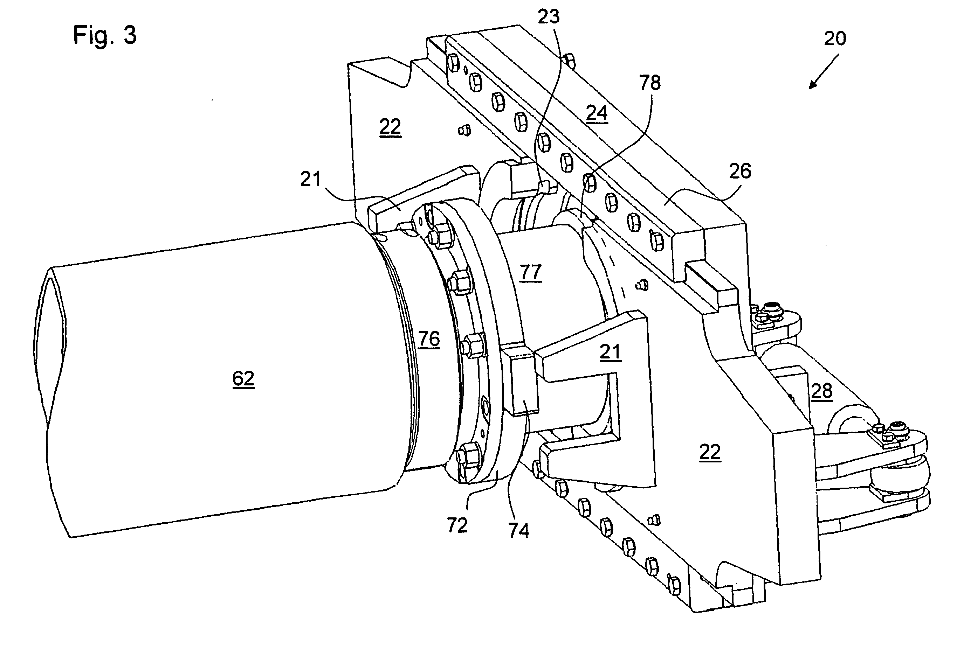

Dabei weist die Anschlussvorrichtung 10 an ihrer Vorderseite einen ersten Anschlussbereich 20 für den äußeren Hüllschlauch 62 auf. Hierzu umfasst das Gehäuse 12 eine vordere Außenplatte 24, an welcher oben und unten Führungsschienen 26 zum linearen Führen von zwei gegenüberliegenden plattenförmigen Halteelementen 22 vorgesehen sind. Die Halteelemente 22 können über Stellzylinder 28 zwischen der dargestellten geöffneten Stellung und einer geschlossenen Stellung zum Halten des Hüllschlauches 62 linear verschoben werden. Aufbau und Funktion werden nachfolgend mit Bezug auf die Figuren 2 und 3 noch näher erläutert.

Die Innenleitungen 64, welche Datenkabel, Elektrokabel, Leitungen für Hydraulikflüssigkeit, Luft oder andere Fluide sein können, erstrecken sich über das Ende des Hüllschlauches 62 hinaus durch eine Durchgangsöffnung 30 in der Außenplatte 24 in das Gehäuse 12 der Anschlussvorrichtung 10 hinein. Die Innenleitungen 64, welche in Fig. 1 teilweise geschnitten dargestellt sind, erstrecken sich bis zu einem rückseitigen zweiten Anschlussbereich 40, an welchem die stationären Leitungen 16 münden. An den Enden der Innenleitungen 64 sind Steckelemente 66 angeordnet, welche passend zu entsprechenden Steckverbindungselementen am zweiten Anschlussbereich 40 zur Herstellung einer Leitungsverbindung ausgebildet sind.

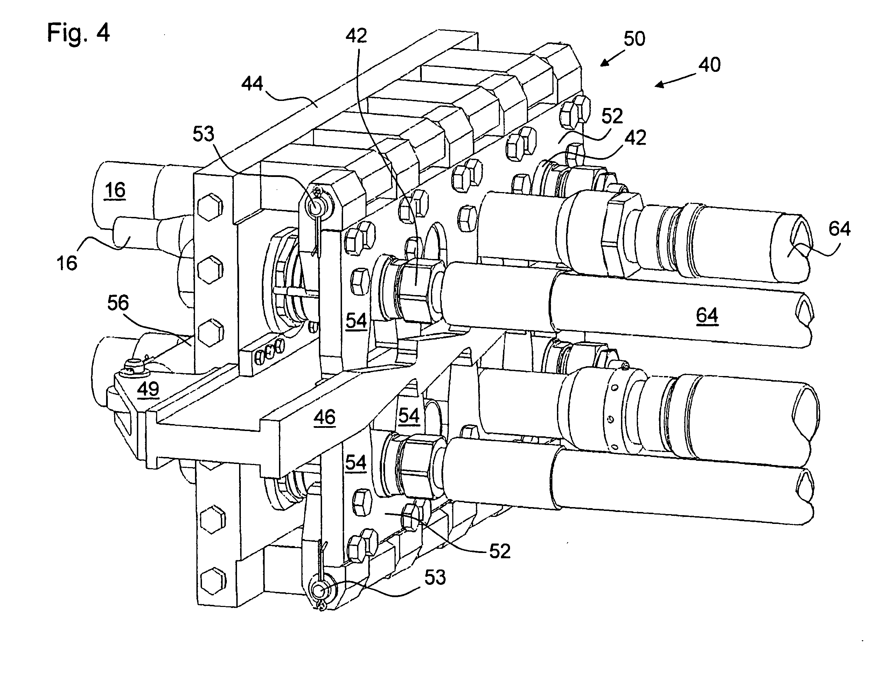

Für ein schnelles Lösen dieser Leitungsverbindungen ist eine Löseeinrichtung 50 vorgesehen, welche gemäß dem dargestellten Ausführungsbeispiel zwei schwenkbar angeordnete kammartige Löseplatten 52 aufweist. Aufbau und Funktion der Löseeinrichtung 50 wird nachfolgend im Zusammenhang mit den Figuren 4 bis 6 näher erläutert.

In der in Fig. 1 dargestellten gelösten oder geöffneten Position der Anschlussvorrichtung 10 kann die Verbindungsleitung 60 einfach von dem Gehäuse 12 abgezogen werden. Um ein Verhaken der Innenleitungen 64 innerhalb des Gehäuses 12 zu verhindern, sind in dem Gehäuse 12 plattenförmige Führungsleisten 34 sowie ein Führungstrichter 32 angeordnet, welcher sich vom Innenraum des Gehäuses 12 zur Durchgangsöffnung 30 in der Außenplatte 24 hin verjüngt.

Aus den Figuren 2 und 3 sind Aufbau und Funktion des ersten Anschlussbereiches 20 zum Anschließen des äußeren Hüllschlauches 62 näher entnehmbar. Am Ende des Hüllschlauches 62 ist ein Schlauchverbinder 70 angebracht. Der flexible Schlauchbereich ist mit einem hülsenförmigen Schaft 76 fest verbunden, an welchen sich ein Zentrierring 72 anschließt. An der Außenseite des Zentrierrings 72 sind zwei gegenüberliegende Zentrierzapfen 74 angeordnet, welche radial vorstehen.

In der in Fig. 2 gezeigten geschlossenen Position des Anschlussbereiches 20 ragt der Zentrierzapfen 74 in eine plattenförmige Zentrieraufnahme 21 hinein, welche senkrecht von einer Vorderseite des plattenförmigen Halteelementes 22 vorsteht. Auf diese Weise bildet der in die Zentrieraufnahme 21 eingreifende Zentrierzapfen 74 eine Verdrehsicherung für den Hüllschlauch 62.

Nach vorne schließt sich an den Zentrierring 72 eine Endhülse 77 des Schlauchverbinders 70 an, wobei an dem freien Ende der Endhülse 77 ein ringförmiger Kragen 78 radial nach außen vorsteht, wie sich aus der geöffneten Position gemäß Fig. 3 ergibt. In dieser Position gemäß Fig. 3 kann der Hüllschlauch 62 axial bis zu einem nicht dargestellten Anschlag an den ersten Anschlussbereich 20 geschoben werden.

Durch Einfahren der Stellzylinder 28 werden die beiden plattenförmigen Halteelemente 22 axial zueinander gefahren. Dabei sind die Halteelemente 22 an ihrer Oberseite und Unterseite in Führungsleisten 26 linear geführt, welche wiederum an der Außenplatte 24 des Gehäuses 12 befestigt sind.

Durch dieses axiale Zusammenschieben der Halteelemente 22 greift der ringförmige Kragen 78 des Schlauchverbinders 70 in eine Ringnut 23 an den bogenförmigen Innenseiten der Halteelemente 22 ein. Hierdurch ergibt sich eine formschlüssige axiale Lagesicherung des Hüllschlauches 62 in der Anschlussvorrichtung 10. Gleichzeitig werden die plattenförmigen Zentrieraufnahmen 21 mit ihrer U-förmigen Ausnehmung über die radial nach außen vorstehenden Zentrierzapfen 74 geschoben, um so eine Verdrehsicherung des Hüllschlauches 62 zu gewährleisten.

Insgesamt wird durch den ersten Anschlussbereich 20 eine zuverlässige, mechanisch stabile Verbindung des Hüllschlauches 62 an der Anschlussvorrichtung 10 gewährleistet.

Die Ausgestaltung des zweiten Anschlussbereiches 40 wird nachfolgend im Zusammenhang mit den Figuren 4 bis 6 erläutert. Der zweite Anschlussbereich 40 umfasst eine die Rückseite des Gehäuses 12 bildende Verbindungsplatte 44. An dieser münden die stationären Leitungen 16 in Steckverbindungselementen 42, welche in den Innenraum des Gehäuses 12 ragen. An den Enden der Innenleitungen 64 sind korrespondierende Steckelemente 66 ausgebildet, um eine entsprechende Leitungsverbindung durch axiales Einschieben herzustellen.

Fig. 4 zeigt den zweiten Anschlussbereich 40 in der geschlossenen Position, also mit angeschlossenen Innenleitungen 64. Die Steckverbindungselemente 42 sind dabei in zwei Reihen übereinander an der Verbindungsplatte 44 angeordnet. Zum Halten der Steckelemente 66 in den Steckverbindungselementen 42 sind zwei kammartige Löseplatten 52 einer Löseeinrichtung 50 um ihre jeweilige Schwenkachse 53 in ihre Verriegelungsposition geschwenkt, in welcher die Löseplatten 52 etwa parallel zur Verbindungsplatte 44 angeordnet sind.

Gemäß Fig. 4 sind die beiden Löseplatten 52 in ihrer Verschlussposition mittels einer Verriegelungsleiste 46 verriegelt. Die Verriegelungsleiste 46 ist an der Verbindungsplatte 44 parallel zu dieser und quer zu den Steckverbindungselementen 42 linear verschiebbar gelagert. Zum linearen Verschieben ist ein Stellzylinder 56 an der Rückseite der Verbindungsplatte 44 angeordnet, welcher über einen Lagerbock 49 mit der Verriegelungsleiste 46 verbunden ist.

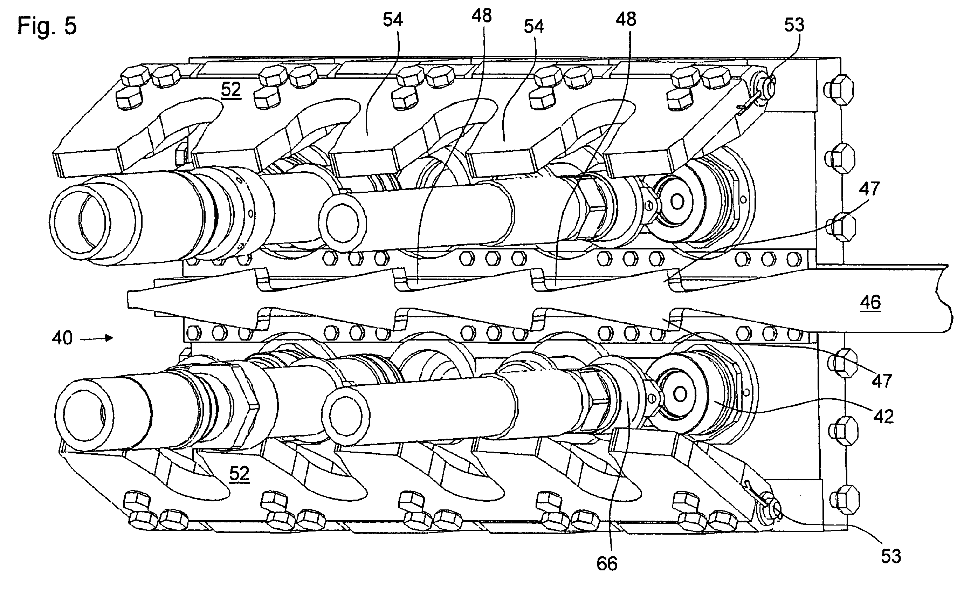

Wie besonders gut aus Fig. 5 ersichtlich, weist die Verriegelungsleiste 46 oben und unten liegende Halteflächen 47 auf, welche sägezahnartig in Freigabeausnehmungen 48 übergehen. In der Verschlussposition gemäß Fig. 4 sind die Halteflächen 47 der Verriegelungsleiste 46 so angeordnet, dass die Löseplatten 52 daran gehindert sind, um ihre Schwenkachsen 53 nach vorne zu schwenken. In dieser verriegelten Position werden die Steckelemente 66 an den Innenleitungen 64 formschlüssig in den zugehörigen Steckverbindungselementen 42 gehalten, so dass zuverlässig eine Leitungsverbindung gewährleistet ist.

Durch Ausfahren des Stellzylinders 56 wird die Verriegelungsleiste 46 derart verschoben, dass die kammartigen Betätigungsnocken 54 der Löseplatte 52 durch die Freigabeausnehmungen 48 frei nach oben beziehungsweise nach unten schwenken können. Die Schwenkbewegung der Löseplatten 52 kann durch einen separaten Stellzylinder, eine separate Spannfeder oder durch Federspannungen in den Steckverbindungselementen 42 und/oder den Steckelementen 66 selbst erfolgen.

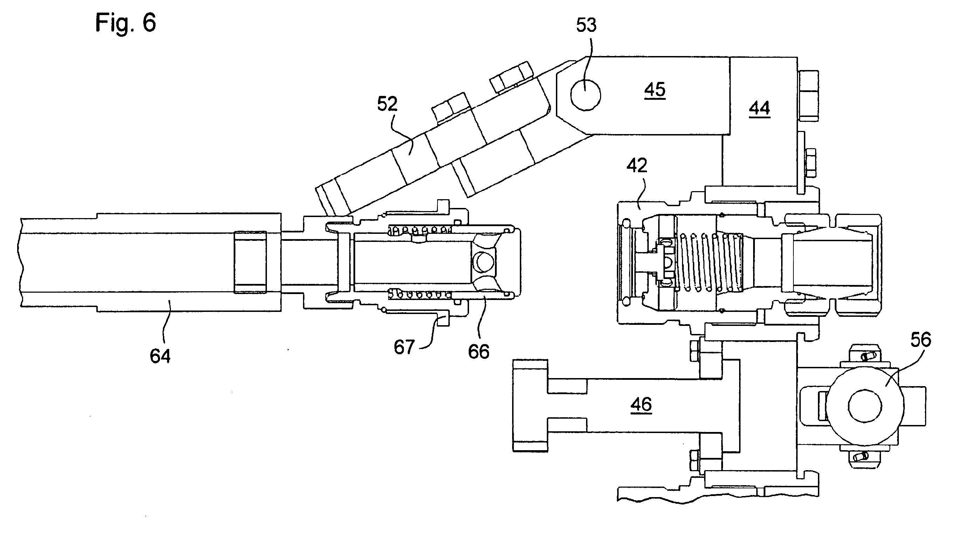

Wie insbesondere aus Fig. 6 näher ersichtlich, wird durch das Freischwenken der Löseplatten 52 um die Schwenkachse 53 die formschlüssige axiale Lagefixierung der Steckelemente 66 mit ihren radial nach außen ragenden Vorsprüngen 67 freigegeben, so dass die Innenleitungen 64 axial abgezogen werden können. Für eine stabile Lagerung der Schwenkplatte 52 sind an der Verbindungsplatte 44 mehrere Lagersockel 45 beabstandet zueinander angeordnet, durch welche die Schwenkachse 53 der Löseeinrichtung 50 hindurchragt.

## Patentansprüche

1. Anschlussvorrichtung für eine Versorgungsleitung (60) mit einem Hüllschlauch (62) und mindestens zwei darin angeordneten Innenleitungen (64), wobei ein Gehäuse (12) mit einem ersten Anschlussbereich (20) für den Hüllschlauch (62) und ein zweiter Anschlussbereich (40) für die Innenleitungen (64) vorgesehen ist,
**dadurch gekennzeichnet,**
**dass** der erste Anschlussbereich (20) mindestens ein Halteelement (22) aufweist, welches zum Halten oder Lösen des Hüllschlauches (62) radial an diesen zustellbar beziehungsweise von diesem rückstellbar gelagert ist, und dass der zweite Anschlussbereich (40) axial beabstandet zu dem ersten Anschlussbereich (20) angeordnet ist und axial betätigbare Steckverbindungselemente (42) für die Innenleitungen (64) aufweist.

2. Anschlussvorrichtung nach Anspruch 1,
**dadurch gekennzeichnet,**
**dass** zwei plattenförmige Halteelemente (22a, 22b) vorgesehen sind, welche auf gegenüberliegenden Seiten des Hüllschlauches (62) verschiebbar gelagert sind.

3. Anschlussvorrichtung nach Anspruch 1 oder 2,
**dadurch gekennzeichnet,**
**dass** das mindestens eine Halteelement (22) mittels eines Stellzylinders (28) betätigbar ist.

4. Anschlussvorrichtung nach einem der Ansprüche 1 bis 3,
**dadurch gekennzeichnet,**
**dass** die Steckverbindungselemente (42) an einer Verbindungsplatte (44) in mindestens einer Reihe nebeneinander angeordnet sind.

5. Anschlussvorrichtung nach einem der Ansprüche 1 bis 4,
**dadurch gekennzeichnet,**
**dass** eine Lösseinrichtung (50) zum gemeinsamen Lösen der Innenleitungen (64) von den Steckverbindungselementen (42) vorgesehen ist.

6. Anschlussvorrichtung nach Anspruch 5,
**dadurch gekennzeichnet,**
**dass** die Löseeinrichtung (50) mindestens eine Löseplatte (52) mit Betätigungsnocken (54) aufweist, welche Steckelemente (66) der Innenleitungen (64) für ein axiales Betätigen teilweise umfassen.

7. Anschlussvorrichtung nach Anspruch 5 oder 6,
**dadurch gekennzeichnet,**
**dass** die Löseeinrichtung (50) mittels eines Stellzylinders (56) betätigbar ist.

8. Anschlussvorrichtung nach einem der Ansprüche 5 bis 7,
**dadurch gekennzeichnet,**
**dass** eine Steuereinrichtung vorgesehen ist, durch welche das mindestens eine Halteelement (22) für den Hüllschlauch (62) und die Löseeinrichtung (50) für die Innenleitungen (64) abgestimmt aufeinander betätigbar sind.

9. Anschlussvorrichtung nach einem der Ansprüche 1 bis 8,
**dadurch gekennzeichnet,**
**dass** die Innenleitungen (64) Stromkabel, Datenkabel und/oder Fluidschläuche umfassen.

10. Anschlussvorrichtung nach einem der Ansprüche 1 bis 9,
**dadurch gekennzeichnet,**
**dass** das Gehäuse (12) eine Außenplatte (24) aufweist, an welcher der erste Anschlussbereich (20) für den Hüllschlauch (62) vorgesehen ist,
**dass** die Außenplatte (24) eine Durchgangsöffnung (30) aufweist, durch welche die Innenleitungen (64) in das Gehäuse (12) zu dem zweiten Anschlussbereich (40) durchführbar sind, und
**dass** zwischen der Außenplatte (24) und dem zweiten Anschlussbereich (40) ein Führungstrichter (32) angeordnet ist, welcher sich zur Durchgangsöffnung (30) hin verjüngt.

11. Anschlussvorsichtung nach Anspruch 10,
**dadurch gekennzeichnet,**
**dass** zwischen der Außenplatte (24) und einer Verbindungsplatte (44) des zweiten Anschlussbereiches (40) Führungsleisten (34) angeordnet sind.

## Claims

1. Connection device for a supply line (60) with a jacket pipe (62) and at least two inner lines (64) arranged therein, wherein a housing (12) with a first connection region (20) for the jacket pipe (62) and a second connection region (40) for the inner lines (64) is provided,
**characterised in that**
the first connection region (20) comprises at least one holding element (22) which is mounted, for the purpose of holding or releasing the jacket pipe (62), so that it can be radially fed thereto or returned therefrom, and
the second connection region (40) is arranged axially spaced apart from the first connection region (20) and comprises axially actuated plug connection elements (42) for the inner lines (64).

2. Connection device according to claim 1,
**characterised in that**
two plate-form holding elements (22a, 22b) are provided which are mounted so that they can be displaced on opposing sides of the jacket pipe (62).

3. Connection device according to claim 1 or 2,
**characterised in that**
the at least one holding element (22) can be actuated by means of an operating cylinder (28).

4. Connection device according to one of the claims 1 to 3,
**characterised in that**
the plug connection elements (42) are arranged on a connecting plate (44) one beside the other in at least one row.

5. Connection device according to one of the claims 1 to 4,
**characterised in that**
a release means (50) for joint release of the inner lines (64) from the plug connection elements (42) is provided.

6. Connection device according to claim 5,
**characterised in that**
the release means (50) comprises at least one release plate (52) with actuating cams (54) which partially include plug elements (66) of the inner lines (64) for axial actuation.

7. Connection device according to claim 5 or 6,
**characterised in that**
the release means (50) can be actuated by means of an operating cylinder (56).

8. Connection device according to one of the claims 5 to 7,
**characterised in that**
a control means is provided, through which the at least one holding element (22) for the jacket pipe (62) and the release means (50) for the inner lines (64) can be actuated orientated to each other.

9. Connection device according to one of the claims 1 to 8,
**characterised in that**
the inner lines (64) comprise power cables, data cables and / or fluid pipes.

10. Connection device according to one of the claims 1 to 9,
**characterised in that**
the housing (12) comprises an outer plate (24), on which the first connection region (20) for the jacket pipe (62) is provided,
the outer plate (24) comprises a passage opening (30), through which the inner lines (64) can be fed into the housing (12) to the second connection region (40), and
a guide funnel (32) is arranged between the outer plate (24) and the second connection region (40), which guide funnel (32) tapers towards the passage opening (30).

11. Connection device according to claim 10,
**characterised in that**
guide bars (34) are arranged between the outer plate (24) and a connecting plate (44) of the second connection region (40).

## Revendications

1. Dispositif de raccordement pour un conduit d'alimentation (60) avec un tuyau de gaine (62) et au moins deux conduits intérieurs (64) placés dedans, dans lequel un boîtier (12) comportant une première zone de raccordement (20) pour le tuyau de gaine (62) est prévu, ainsi qu'une deuxième zone de raccordement (40) pour les conduits intérieurs (64),
**caractérisé en ce que** la première zone de raccordement (20) présente au moins un élément de maintien (22) qui, pour tenir ou libérer le tuyau de gaine (62), est monté de manière à pouvoir être rapproché radialement de celui-ci ou écarté de celui-ci, et
**en ce que** la deuxième zone de raccordement (40) est placée à distance axiale de la première zone de raccordement (20) et présente des éléments d'enfichage (42) actionnables axialement pour les conduits intérieurs (64).

2. Dispositif de raccordement selon la revendication 1, **caractérisé en ce que** deux éléments de maintien (22a, 22b) en forme de plaques sont prévus, qui sont montés mobiles sur des côtés opposés du tuyau de gaine (62).

3. Dispositif de raccordement selon la revendication 1 ou 2, **caractérisé en ce que** l'élément de maintien (22) au nombre d'au moins un peut être actionné au moyen d'un vérin (28).

4. Dispositif de raccordement selon l'une des revendications 1 à 3, **caractérisé en ce que** les éléments d'enfichage (42) sont juxtaposés en au moins une rangée sur une plaque de jonction (44).

5. Dispositif de raccordement selon l'une des revendications 1 à 4, **caractérisé en ce qu'**un dispositif de libération (50) est prévu pour libérer en commun les conduits intérieurs (64) depuis les éléments d'enfichage (42).

6. Dispositif de raccordement selon la revendication 5, **caractérisé en ce que** le dispositif de libération (50) présente au moins une plaque de libération (52) avec des cames d'actionnement (54) qui saisissent partiellement des éléments à fiche (66) des conduits intérieurs (64) en vue d'un actionnement axial.

7. Dispositif de raccordement selon la revendication 5 ou 6, **caractérisé en ce que** le dispositif de libération (50) peut être actionné au moyen d'un vérin (56).

8. Dispositif de raccordement selon l'une des revendications 5 à 7, **caractérisé en ce qu'**un dispositif de commande est prévu, avec lequel l'élément de maintien (22) au nombre d'au moins un destiné au tuyau de gaine (62) et le dispositif de libération (50) destiné aux conduits intérieurs (64) peuvent être actionnés de manière coordonnée.

9. Dispositif de raccordement selon l'une des revendications 1 à 8, **caractérisé en ce que** les conduits intérieurs (64) comprennent des câbles électriques, des câbles de données et/ou des tuyaux de fluide.

10. Dispositif de raccordement selon l'une des revendications 1 à 9, **caractérisé en ce que** le boîtier (12) présente une plaque extérieure (24) sur laquelle est prévue la première zone de raccordement (20) destinée au tuyau de gaine (62),
**en ce que** la plaque extérieure (24) présente un passage (30) à travers lequel les conduits intérieurs (64) peuvent pénétrer dans le boîtier (12) en direction de la deuxième zone de raccordement (40), et
**en ce qu'**entre la plaque extérieure (24) et la deuxième zone de raccordement (40) est placé un entonnoir de guidage (32) qui est effilé en direction du passage (30).

11. Dispositif de raccordement selon la revendication 10, **caractérisé en ce que** des barres de guidage (34) sont placées entre la plaque extérieure (24) et une plaque de jonction (44) de la deuxième zone de raccordement (40).
